(19) Europäisches Patentamt
European Patent Office
Office européen des brevets

(11) **EP 4 495 197 A1**

(12) **EUROPEAN PATENT APPLICATION**
published in accordance with Art. 153(4) EPC

(43) Date of publication:
**22.01.2025 Bulletin 2025/04**

(21) Application number: 23770256.8

(22) Date of filing: **16.02.2023**

(51) International Patent Classification (IPC):
*C09D 11/40* $^{(2014.01)}$    *C09D 11/54* $^{(2014.01)}$
*B41M 5/00* $^{(2006.01)}$    *B41J 2/01* $^{(2006.01)}$

(52) Cooperative Patent Classification (CPC):
**B41J 2/01; B41M 5/00; C09D 11/40; C09D 11/54**

(86) International application number:
**PCT/JP2023/005561**

(87) International publication number:
**WO 2023/176296 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.03.2022 JP 2022039587**

(71) Applicant: FUJIFILM Corporation
**Tokyo 106-8620 (JP)**

(72) Inventors:
• IKOSHI, Masao
 **Ashigarakami-gun, Kanagawa 258-8577 (JP)**
• MITSUYASU, Takashi
 **Ashigarakami-gun, Kanagawa 258-8577 (JP)**
• ASANO, Yuji
 **Ashigarakami-gun, Kanagawa 258-8577 (JP)**
• MIZOE, Taiga
 **Ashigarakami-gun, Kanagawa 258-8577 (JP)**

(74) Representative: Klunker IP
**Patentanwälte PartG mbB
Destouchesstraße 68
80796 München (DE)**

(54) **INK-JET RECORDING METHOD**

(57)    Provided is an ink jet recording method including an applying step of applying a pretreatment liquid onto a resin base material during transportation in a state where a tension T of 20 N/m or greater is applied to the resin base material and applying a first ink and a second ink in this order respectively by an ink jet recording system, in which a value X defined by Equation (X) is 85 or greater. In Equation (X), d represents a thickness of the resin base material in units of $\mu$m, A represents a total amount of the water-soluble organic solvent to be applied in units of $g/m^2$ in the pretreatment liquid and the first ink applied onto the resin base material in the applying step, and $\Delta$HSP represents an HSP distance in units of $MPa^{1/2}$ between the water-soluble organic solvent in the pretreatment liquid and the first ink applied onto the resin base material in the applying step and the resin base material.

$$\text{Value } X = (d/A) \times \Delta HSP \dots \text{ Equation (X)}$$

FIG. 1

EP 4 495 197 A1

**Description**

BACKGROUND OF THE INVENTION

1. Field of the Invention

The present disclosure relates to an ink jet recording method.

2. Description of the Related Art

In the related art, a technique of recording an image by applying a pretreatment liquid (also referred to as a primer ink or the like) to a resin base material such as a plastic film and applying an ink onto the surface of the resin base material to which the pretreatment liquid has been applied is known.

For example, JP2017-88646A discloses, as a primer ink for ink jet recording which has excellent storage stability and is capable of improving the adhesiveness, the bleeding property, and the water resistance of an image in a case of being printed on a resin base material consisting of a plastic film, with an ink composition for inkjet recording, a primer ink for ink jet recording which is provided for a resin base material consisting of a plastic film, the primer ink containing a water-soluble polyvalent metal salt as a component (A), a chlorinated polyolefin emulsion as a component (B), at least one of an acrylic emulsion or a vinyl acetate emulsion as a component (C), and water as a component (D). JP2017-88646A also discloses that a primer layer is formed on a plastic film using the above-described primer ink for ink jet recording, and an image is formed by applying an ink for ink jet recording onto the formed primer layer.

SUMMARY OF THE INVENTION

As a result of examination conducted by the present inventors, it has been found that in a case where a pretreatment liquid containing water and an aggregating agent, a first ink which contains water, a water-soluble organic solvent, and a pigment and is one of a colored ink and a white ink, and a second ink which contains water, a water-soluble organic solvent, and a pigment and is the other of the colored ink and the white ink are used and a multicolor image is recorded by applying the pretreatment liquid onto a resin base material during transportation in a state where a tension is applied thereto and applying the first ink and the second ink in this order onto a region of the resin base material where the pretreatment liquid has been applied respectively by an inkjet recording system, intercolor misregistration and/or streak defects may occur in the obtained multicolor image.

In the present disclosure, the intercolor misregistration denotes a phenomenon in which a positional relationship between an image derived from a first ink and an image derived from a second ink in a multicolor image is deviated from an intended positional relationship.

In the present disclosure, the streak defects in the multicolor image denote streak-like defects in the multicolor image.

An object to be achieved by an embodiment of the present disclosure is to provide an ink jet recording method that enables recording of a multicolor image in which intercolor misregistration and streak defects are suppressed.

The present disclosure includes the following aspects.

<1> An ink jet recording method comprising: a step of preparing a resin base material; a step of preparing a pretreatment liquid which contains water and an aggregating agent; a step of preparing a first ink which contains water, a water-soluble organic solvent, and a pigment and is one of a colored ink and a white ink; a step of preparing a second ink which contains water, a water-soluble organic solvent, and a pigment and is the other of the colored ink and the white ink; and an applying step of applying the pretreatment liquid onto the resin base material during transportation in a state where a tension T of 20 N/m or greater is applied to the resin base material and applying the first ink and the second ink in this order onto a region of the resin base material where the pretreatment liquid has been applied respectively by an inkjet recording system, in which a value X defined by Equation (X) is 85 or greater,

$$\text{Value } X = (d/A) \times \Delta\text{HSP} \dots \text{Equation (X)}$$

in Equation (X), d represents a thickness of the resin base material in units of $\mu$m, A represents a total amount of the water-soluble organic solvent to be applied in units of $g/m^2$ in the pretreatment liquid and the first ink applied onto the resin base material in the applying step, and $\Delta$HSP represents an HSP distance in units of $MPa^{1/2}$ between the water-soluble organic solvent in the pretreatment liquid and the first ink applied onto the resin base material in the applying step and the resin base material.

<2> The inkjet recording method according to <1>, in which the value X is 400 or less.

<3> The inkjet recording method according to <1> or <2>, in which a value T/X, which is a value obtained by dividing the tension T by the value X, is 0.30 or greater and 0.65 or less.

<4> The inkjet recording method according to any one of <1> to <3>, in which the ΔHSP is 10.0 or greater and 23.0 or less.

<5> The ink jet recording method according to any one of <1> to <4>, in which the tension T is 200 N/m or less.

<6> The ink jet recording method according to any one of <1> to <5>, in which the tension T is 120 N/m or less.

<7> The ink jet recording method according to any one of <1> to <6>, in which the tension T is 30 N/m or greater.

According to an embodiment of the present disclosure, it is possible to provide an ink jet recording method that enables recording of a multicolor image in which intercolor misregistration and streak defects are suppressed.

BRIEF DESCRIPTION OF THE DRAWINGS

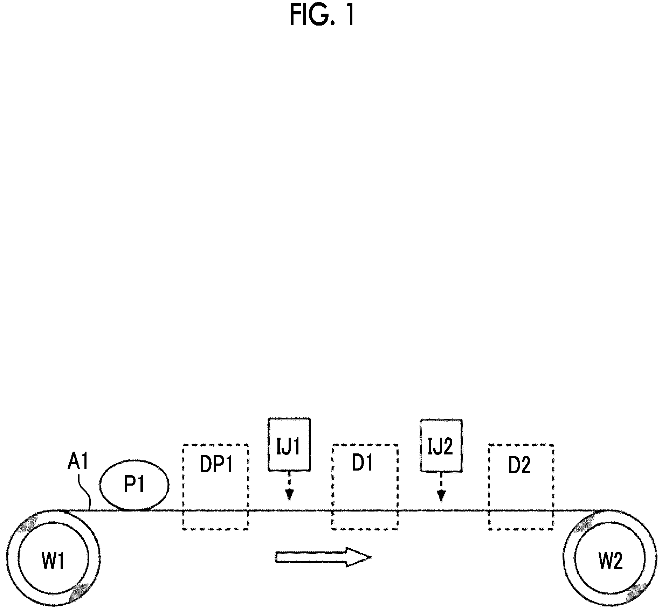

Fig. 1 is a view conceptually showing an example of an inkjet recording device used to perform an ink jet recording method of the present disclosure.

DESCRIPTION OF THE PREFERRED EMBODIMENTS

In the present specification, a numerical range shown using "to" indicates a range including the numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present specification, an upper limit or a lower limit described in a certain numerical range may be replaced with a value described in an example.

In the present specification, in a case where a plurality of substances corresponding to respective components in a composition are present, the amount of the respective components in the composition indicates the total amount of the plurality of substances present in the composition unless otherwise specified.

In the present specification, a combination of two or more preferred embodiments is a more preferred embodiment.

In the present specification, the meaning of the term "step" includes not only an independent step but also a step whose intended purpose is achieved even in a case where the step is not clearly distinguished from other steps.

In the present specification, the term "image" denotes an entire film formed by applying the pretreatment liquid and the ink in this order, the term "ink jet recording" denotes image recording by an inkjet recording system, and the term "image recording" denotes formation of an image (that is, a film).

Further, the concept of "image" in the present specification also includes a solid image.

In the present specification, the term "amount to be applied" denotes the mass (g) to be applied per area of 1 $m^2$ in units of g/$m^2$ unless otherwise specified.

In the present specification, the term "solvent" denotes an organic solvent unless otherwise specified.

In the present specification, the concept of "(meth)acrylate" includes both acrylate and methacrylate. In addition, the concept of "(meth)acryl" includes both acryl and methacryl.

[Ink jet recording method]

An ink jet recording method according to the present disclosure (hereinafter, also simply referred to as "recording method") is a recording method including a step of preparing a resin base material, a step of preparing a pretreatment liquid which contains water and an aggregating agent, a step of preparing a first ink which contains water, a water-soluble organic solvent, and a pigment and is one of a colored ink and a white ink, a step of preparing a second ink which contains water, a water-soluble organic solvent, and a pigment and is the other of the colored ink and the white ink, and an applying step of applying the pretreatment liquid onto the resin base material during transportation in a state where a tension T of 20 N/m or greater is applied to the resin base material and applying the first ink and the second ink in this order onto a region of the resin base material where the pretreatment liquid has been applied respectively by an inkjet recording system, in which a value X defined by Equation (X) is 85 or greater.

$$\text{Value } X = (d/A) \times \Delta HSP \text{ ... Equation (X)}$$

In Equation (X), d represents a thickness of the resin base material in units of μm, A represents a total amount of the water-soluble organic solvent to be applied in units of g/m² in the pretreatment liquid and the first ink applied onto the resin base material in the applying step, and ΔHSP represents an HSP distance in units of MPa$^{1/2}$ between the water-soluble organic solvent in the pretreatment liquid and the first ink applied onto the resin base material in the applying step and the resin base material.

According to the recording method of the present disclosure, a multicolor image in which streak defects and intercolor misregistration are suppressed can be recorded.

The reason why such an effect is exhibited is assumed as follows.

As described above, the intercolor misregistration in the present disclosure denotes a phenomenon in which a positional relationship between the first image (that is, the image derived from the first ink) and the second image (that is, the image derived from the second ink) in the multicolor image is deviated from an intended positional relationship.

The intercolor misregistration is considered to occur due to the elongation of the resin base material after the application of the first ink and before the application of the second ink.

The elongation of the resin base material is considered to occur in a case where the tension T is applied to the resin base material before the application of the second ink and the water-soluble organic solvent is applied thereto.

The degree of elongation of the resin base material (that is, the degree of intercolor misregistration) is considered to be related to · the magnitude of the tension T applied to the resin base material before the application of the second ink, · the thickness of the resin base material (that is, "d" in Equation (X)), · the total amount of the water-soluble organic solvent to be applied to the resin base material before the application of the second ink (that is, "A" in Equation (X)), and · the HSP distance between the resin base material and the water-soluble organic solvent applied to the resin base material before the application of the second ink (that is, "ΔHSP" in Equation (X)).

As described above, the streak defects in the present disclosure are streak-like defects in the multicolor image.

It is considered that the streak defects are caused by transportation failure (for example, transportation flutter) of the resin base material.

In the recording method of the present disclosure, a factor that the tension T of the resin base material in the applying step is 20 N/m or greater is considered to contribute to the effect of suppressing streak defects (see the group of examples and Comparative Example 1 described below).

Specifically, it is considered that in a case where the tension T of the resin base material in the applying step is 20 N/m or greater, the transportation state of the resin base material is stabilized, and as a result, streak defects caused by transportation failure (for example, transportation flutter) of the resin base material are suppressed.

However, as a result of examination conducted by the present inventors, it has been found that in a case where the tension T of the resin base material in the applying step is 20 N/m or greater, the intercolor misregistration in the multicolor image is likely to occur (see Comparative Example 2 described later). The reason for this is considered to be that the elongation of the resin base material is likely to occur due to an increase in tension T of the resin base material.

Therefore, the present inventors have found that the intercolor misregistration is suppressed by adjusting d in Equation (X), A in Equation (X), and ΔHSP in Equation (X) so that the value X (= (d/A) × ΔHSP) is adjusted to 85 or greater.

That is, the factor that the value X is 85 or greater is considered to contribute to the effect of suppressing the intercolor misregistration.

Here, d, A, and ΔHSP can be adjusted by adjusting the thickness (d) of the resin base material, the formulation of the pretreatment liquid, the amount thereof to be applied, the formulation of the first ink, the amount thereof to be applied, the combination of the kind of the resin base material and the kind of the water-soluble organic solvent in the pretreatment liquid and the first ink, and the like.

Hereinafter, first, the value X in the present disclosure will be described.

<Value X>

The value X in the present disclosure is a value determined by Equation (X).

$$\text{Value X} = (d/A) \times \Delta HSP \ldots \text{Equation (X)}$$

In Equation (X), d, A, and ΔHSP are as described above.

In Equation (X), "A" which is a factor that promotes the elongation of the resin base material is disposed in the denominator, and "d" and ΔHSP which are factors that suppress the elongation of the resin base material are disposed in the numerator.

In the recording method of the present disclosure, the lower limit (85) of the value X determined by Equation (X) is specified. In a case where the value X is 85 or greater, the elongation of the resin base material is suppressed, and as a result, the intercolor misregistration due to the elongation of the resin base material is suppressed.

The value X is 85 or greater.

From the viewpoint of further suppressing intercolor misregistration, the value X is preferably 90 or greater and more preferably 100 or greater.

From the viewpoint of further suppressing intercolor misregistration, the upper limit of the value X is not particularly limited.

From the viewpoints of suppressing intercolor bleeding and/or jetting recovering properties of the first ink, the value X is preferably 550 or less, more preferably 400 or less, and still more preferably 300 or less.

In the present disclosure, the jetting recovering properties of the first ink denote recovering properties of the jetting position accuracy in a case where jetting of the first ink is restarted after suspension of the jetting of the first ink from the inkjet head.

- d in Equation (X) -

In Equation (X), d represents the thickness of the resin base material in units of $\mu$m.

Here, d is preferably 12 or greater and 200 or less, more preferably 12 or greater and 100 or less, still more preferably 12 or greater and 60 or less, and even still more preferably 15 or greater and 60 or less.

In a case where d is 12 or greater, the elongation of the resin base material is further suppressed, and as a result, the intercolor misregistration is further reduced. In addition, the transportation flutter of the resin base material is further reduced, and as a result, scratch defects are further suppressed.

In a case where d is 200 or less, the heat capacity of the resin base material is reduced, the drying properties of the first ink and the second ink are further improved, and as a result, intercolor bleeding between the first image and the second image in the multicolor image (hereinafter, also simply referred to as "intercolor bleeding") is further suppressed.

- A in Equation (X) -

In Equation (X), A represents the total amount of the water-soluble organic solvent to be applied in units of $g/m^2$ in the pretreatment liquid and the first ink applied onto the resin base material in the applying step.

A in Equation (X), that is, the total amount of the water-soluble organic solvent to be applied in units of $g/m^2$ in the pretreatment liquid and the first ink applied onto the resin base material in the applying step denotes the sum of the total amount of the water-soluble organic solvent to be applied in units of $g/m^2$ in the pretreatment liquid and the total amount of the water-soluble organic solvent to be applied in units of $g/m^2$ in the first ink.

A in Equation (X) is calculated based on the amount ($g/m^2$) of the pretreatment liquid to be applied, the ratio of the mass of the water-soluble organic solvent to the mass of the pretreatment liquid, the amount ($g/m^2$) of the first ink to be applied, and the ratio of the mass of the water-soluble organic solvent to the mass of the first ink.

Here, the pretreatment liquid may contain no water-soluble organic solvent.

Therefore, the ratio of the mass of the water-soluble organic solvent to the mass of the pretreatment liquid may be 0, and the total amount of the water-soluble organic solvent to be applied in units of $g/m^2$ in the pretreatment liquid may also be 0.

A is preferably 0.5 or greater and 5.0 or less, more preferably 0.8 or greater and 4.4 or less, still more preferably 1.0 or greater and 4.0 or less, and even still more preferably 1.5 or greater and 3.0 or less.

In a case where A is 0.5 or greater, the jetting recovering properties of the first ink are further improved.

Further, in general, as A increases, the elongation of the resin base material is promoted due to the influence of the applied water-soluble organic solvent, and as a result, the intercolor misregistration tends to be promoted. However, in the recording method of the present disclosure, even in a case where A increases, the elongation of the resin base material and the intercolor misregistration are suppressed by setting the value X to 85 or greater.

Further, in a case where A is 5.0 or less, intercolor bleeding is further suppressed.

- ΔHSP in Equation (X) -

ΔHSP represents an HSP distance between the water-soluble organic solvent in the pretreatment liquid and the first ink applied onto the resin base material in the applying step and the resin base material in units of $MPa^{1/2}$.

In the present disclosure, HSP in the HSP distance denotes the Hansen solubility parameter.

The Hansen solubility parameter (HSP) is a value obtained by quantifying the solubility of a substance (X) in another substance (Z) using a multidimensional vector. It is indicated that the substance is easily dissolved in another substance (the compatibility is high) as the distance between vectors of X and Z is reduced.

In the present disclosure, in regard to the HSP of the water-soluble organic solvent and the resin base material, three vectors ($\delta$D (dispersion element), $\delta$P (polarization element), and $\delta$H (hydrogen bond element)) are determined by using HSPiP software (see https://www.pirika.com/JP/HSP/index.html and https://www.hansen-solubility.com/index.php?id=11).

The HSP of the resin base material is determined as the HSP value of the resin contained in the resin base material.

The HSP distance is defined as a value calculated by applying $\delta D$ (dispersion element), $\delta P$ (polarization element), and $\delta H$ (hydrogen bond element) of each of two kinds of objects intended to be compared to the following formula.

For example, the HSP distance between a certain resin and a certain water-soluble organic solvent can be determined by setting the dispersion element of the resin as $\delta D_1$, the polarization element of the resin as $\delta P_1$, the hydrogen bond element of the resin as $\delta H_1$, the dispersion element of the water-soluble organic solvent as $\delta D_2$, the polarization element of the water-soluble organic solvent as $\delta P_2$, and the hydrogen bond element of the water-soluble organic solvent as $\delta H_2$ and applying these parameters to the following equation.

$$\text{HSP distance} = \sqrt{4(\delta D_1 - \delta D_2)^2 + (\delta P_1 - \delta P_2)^2 + (\delta H_1 - \delta H_2)^2}$$

In a case where only one kind of water-soluble organic solvent is used in the pretreatment liquid and the first ink applied onto the resin base material in the applying step, $\Delta$HSP in Equation (X) is the HSP distance between the water-soluble organic solvent and the resin base material.

In a case where two or more kinds of water-soluble organic solvents are used in the pretreatment liquid and the first ink applied onto the resin base material in the applying step, $\Delta$HSP in Equation (X) is a value obtained by calculating the weighted average of the HSP distances between the water-soluble organic solvents and the resin base material, which are calculated for each water-soluble organic solvent species, based on the applied mass fraction of the water-soluble organic solvent species.

Here, the applied mass fraction of the water-soluble organic solvent species denotes the mass proportion of the water-soluble organic solvent species in the total amount of the water-soluble organic solvent in the pretreatment liquid and the first ink applied onto the resin base material.

In the present disclosure, values of one digit after a decimal point are used for both $\Delta$HSP and each HSP distance in Equation (X).

Hereinafter, a method of determining $\Delta$HSP in Equation (X) in an example of the present disclosure (Example 1 described below) will be described.

This example is an example in which the resin base material is a polyethylene terephthalate (PET) base material, only one kind of propylene glycol (PG) is used as the water-soluble organic solvent contained in the pretreatment liquid, the content of PG in the pretreatment liquid is 20% by mass, two kinds of water-soluble organic solvents which are propylene glycol (PG) and propylene glycol monomethyl ether (PGmME) are used as the water-soluble organic solvents contained in the first ink, the content of PG in the first ink is 30% by mass, the content of PGmME in the first ink is 3% by mass, the amount of the pretreatment liquid to be applied in the applying step is 1.7 g/m$^2$, and the amount of the first ink to be applied in the applying step is 7.2 g/m$^2$. The HSP distance between the PET base material and PG is calculated to 20.8 MPa$^{1/2}$, and the HSP distance between the PET base material and PGmME is calculated to 11.6 MPa$^{1/2}$ by using HSPiP software. The amount of PG to be applied in the applying step is calculated to 2.5 g/m$^2$ in the following manner (calculation equation: amount of pretreatment liquid to be applied $\times$ proportion of PG in pretreatment liquid + amount of first ink to be applied $\times$ proportion of PG in first ink = 1.7 $\times$ 0.2 + 7.2 $\times$ 0.3 = 2.5). The amount of PGmME to be applied in the applying step is calculated to 0.216 g/m$^2$ in the following manner (calculation equation: amount of pretreatment liquid to be applied $\times$ proportion of PGmME in pretreatment liquid + amount of first ink to be applied $\times$ proportion of PGmME in first ink = 1.7 $\times$ 0 + 7.2 $\times$ 0.03 = 0.216). Therefore, $\Delta$HSP in Equation (X) in the example is calculated as follows.

$\Delta$HSP = (HSP distance between PET base material and PG) $\times$ (amount of PG to be applied/(amount of PG to be applied + amount of PGmME to be applied)) + (HSP distance between PET base material and PGmME) $\times$ (amount of PGmME to be applied/(amount of PG to be applied + amount of PGmME to be applied)) = 20.8 $\times$ (2.5/(2.5 + 0.216)) + 11.6 $\times$ (0.216/(2.5 + 0.216)) = 20.1

Hereinafter, an example of the HSP distance between the water-soluble organic solvent species and the resin base material species will be described.

[Table 1]

| | | |
|---|---|---|
| HSP distance between each solvent species and PET base material (MPa$^{1/2}$) | PGmME | 11.6 |
| | PGmPE | 9.5 |
| | PGmBE | 9.8 |
| | Gly | 26.5 |
| | EG | 25.4 |
| | DEG | 19.1 |
| | TEG | 19.1 |
| | PG | 20.8 |
| | DPG | 17.5 |
| | 1-Hex | 12.2 |
| | 1-pen | 13.5 |
| | EGmBE | 12.0 |
| | DEGmBE | 10.5 |
| | DEGmEE | 12.3 |
| | DPGmME | 11.3 |
| | PGmEE | 10.6 |
| | 1,2-Butanediol | 19.0 |
| HSP distance between each solvent species and OPP base material (MPa$^{1/2}$) | PGmME | 12.5 |
| | PGmPE | 10.8 |
| | PGmBE | 9.6 |
| | Gly | 28.7 |
| | EG | 27.4 |
| | DEG | 21.7 |
| | TEG | 21.6 |
| | PG | 22.9 |
| | DPG | 19.8 |
| | 1-Hex | 13.0 |
| | 1-pen | 14.3 |
| | EGmBE | 12.5 |
| | DEGmBE | 11.9 |
| | DEGmEE | 14.5 |
| | DPGmME | 11.8 |
| | PGmEE | 11.6 |
| | 1,2-Butanediol | 20.9 |

(continued)

| | | |
|---|---|---|
| HSP distance between each solvent species and Nylon base material (MPa$^{1/2}$) | PGmME | 8.2 |
| | PGmPE | 6.0 |
| | PGmBE | 6.4 |
| | Gly | 23.7 |
| | EG | 22.5 |
| | DEG | 16.2 |
| | TEG | 16.1 |
| | PG | 17.9 |
| | DPG | 14.5 |
| | 1-Hex | 8.9 |
| | 1-pen | 10.3 |
| | EGmBE | 8.8 |
| | DEGmBE | 7.2 |
| | DEGmEE | 9.1 |
| | DPGmME | 7.9 |
| | PGmEE | 7.2 |
| | 1,2-Butanediol | 16.0 |

The meanings of the abbreviations in Table 1 are as follows.

· PGmME: propylene glycol monomethyl ether
· PGmPE: propylene glycol monopropyl ether
· PGmBE: propylene glycol monobutyl ether
· Gly: glycerin
· EG: ethylene glycol
· DEG: diethylene glycol
· TEG: triethylene glycol
· PG: propylene glycol
· DPG: dipropylene glycol
· 1-Hex: 1-hexanol
· 1-Pen: 1-pentanol
· EGmBE: ethylene glycol monobutyl ether
· DEGmBE: diethylene glycol monobutyl ether
· DEGmEE: diethylene glycol monoethyl ether
· DPGmME: dipropylene glycol monomethyl ether
· PGmEE: propylene glycol monoethyl ether
· PET: polyethylene terephthalate
· OPP: oriented polypropylene
· Nylon: nylon

ΔHSP is preferably 5.0 or greater and 30.0 or less, more preferably 10.0 or greater and 27.0 or less, and still more preferably 10.0 or greater and 23.0 or less.
In a case where ΔHSP is 5.0 or greater, intercolor misregistration is further suppressed.
In a case where ΔHSP is 30.0 or less, intercolor bleeding is further suppressed.

<Tension T>

The tension T of the resin base material in the applying step is 20 N/m or greater.
In a case where the tension T is 20 N/m or greater, transportation flutter and streak defects of the multicolor image can be suppressed.

From the viewpoint of further suppressing streak defects of the multicolor image, the tension T is preferably 30 N/m or greater, more preferably 40 N/m or greater, still more preferably 50 N/m or greater, and even still more preferably 60 N/m or greater.

In general, in a case where the tension to be applied to the resin base material is high as in a case where the tension T is 20 N/m or greater, the resin base material is likely to be elongated, and thus intercolor misregistration in the multicolor image may occur.

However, in the image recording of the present disclosure, in a case where the above-described value X is 85 or greater, the elongation of the resin base material is suppressed even though the tension T of the resin base material is 20 N/m or greater, and as a result, the intercolor misregistration in the multicolor image is suppressed.

The tension T of the resin base material in the applying step is preferably 200 N/m or less.

In a case where the tension T of the resin base material is 200 N/m or less, the intercolor misregistration in the multicolor image is further suppressed.

From the viewpoint of further suppressing intercolor misregistration, the tension T of the resin base material is more preferably 170 N/m or less, still more preferably 120 N/m or less, and even still more preferably 90 N/m or less.

<Value T/X>

The value T/X, which is a value obtained by dividing the tension T by the value X, is not particularly limited, but is preferably 0.10 or greater and 1.30 or less, more preferably 0.20 or greater and 1.00 or less, and still more preferably 0.30 or greater and 0.65 or less from the viewpoint of suppressing intercolor bleeding and/or the jetting recovering properties of the first ink.

In a case where the value T/X is 0.10 or greater, the jetting recovering properties of the first ink are further suppressed.

In a case where the value T/X is 1.30 or less, the intercolor bleeding is further suppressed.

Hereinafter, each step that can be included in the recording method according to the present disclosure will be described.

<Step of preparing resin base material>

The recording method of the present disclosure includes a step of preparing a resin base material.

The shape of the resin base material is not particularly limited, but a film shape (that is, a sheet shape) is preferable.

The preferable ranges of the thickness of the resin base material (the "d" in Equation (X)) are as described above.

From the viewpoint of easily applying the tension T, a long film shape (that is, a long sheet shape) is more preferable as the shape of the resin base material.

The length of the resin base material in a case where the resin base material has a long film shape is not particularly limited, but is preferably 5 m or greater, more preferably 10 m or greater, and still more preferably 100 m or greater.

The upper limit of the length of the resin base material in a case where the resin base material has a long film shape is not particularly limited, and may be, for example, 10,000 m, 8,000 m, or 5,000 m.

Examples of the resin base material include a polyester base material, a polyethylene base material, a polypropylene base material, and a nylon base material.

The resin base material may be a stretched base material or an unstretched base material.

The resin base material may be an impermeable base material having transparency.

Here, the expression of "having transparency" denotes that the transmittance of visible light having a wavelength of 400 nm to 700 nm is 80% or greater (preferably 90% or greater).

In a case where the resin base material is a resin base material having transparency, an image is easily visually recognized through the resin base material from an image non-recording surface side of the resin base material.

For example, in a case where the resin base material is a resin base material having transparency and in a case where the pretreatment liquid, at least one colored ink as the first ink, and a white ink as the second ink are applied in this order onto the resin base material to record a multicolor image, a colored image (for example, a pattern image such as a character or a figure) having a white image (for example, a solid image) as a background is easily visually recognized through the resin base material from the image non-recording surface side of the resin base material.

The resin base material may be subjected to a surface treatment.

Examples of the surface treatment include a corona treatment, a plasma treatment, a flame treatment, a heat treatment, an abrasion treatment, a light irradiation treatment (UV treatment), and a flame treatment, but the surface treatment is not limited thereto.

<Step of preparing pretreatment liquid>

The recording method of the present disclosure includes a step of preparing a pretreatment liquid containing water and an aggregating agent.

The step of preparing the pretreatment liquid may be a step of simply preparing a pretreatment liquid that has been produced in advance or a step of producing a pretreatment liquid.

Hereinafter, each component that can be contained in the pretreatment liquid will be described.

(Water)

The pretreatment liquid contains water.

The content of water is preferably 50% by mass or greater and more preferably 60% by mass or greater with respect to the total amount of the pretreatment liquid.

The upper limit of the content of water depends on the amount of other components, but is preferably 90% by mass or less and more preferably 80% by mass or less with respect to the total amount of the pretreatment liquid.

(Aggregating agent)

The pretreatment liquid contains at least one aggregating agent.

The aggregating agent in the pretreatment liquid aggregates at least the components in the first ink on the resin base material. In this manner, the image quality of at least the first image (that is, the image derived from the first ink) can be improved.

It is preferable that the aggregating agent is at least one selected from the group consisting of an organic acid, a polyvalent metal compound, a metal complex, and a cationic polymer.

Preferred examples of the aggregating agent also include the aggregating agents described in paragraphs 0122 to 0130 of WO2020/195360A.

Hereinafter, preferable aspects of each of the organic acid, the polyvalent metal compound, the metal complex, and the cationic polymer that can be used as the aggregating agent will be described.

- Organic acid -

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, a phosphoric acid group or a carboxy group is preferable, and a carboxy group is more preferable as the acidic group.

Further, it is preferable that at least a part of the acidic group is dissociated in the pretreatment liquid.

Examples of the organic compound containing a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable, and malonic acid, malic acid, tartaric acid, succinic acid, glutaric acid, pimelic acid, adipic acid, or citric acid is more preferable.

It is preferable that the organic acid has a low pKa (for example, 1.0 to 5.0). In this manner, the surface charge of particles such as resin particles or the pigment stably dispersed in the ink by a weakly acidic functional group such as a carboxy group can be reduced by bringing the ink into contact with an organic acid having a lower pKa to degrade the dispersion stability.

It is preferable that the organic acid has a low pKa, high solubility in water, and a valence of divalent or higher. Further, it is more preferable that the organic acid has a high buffer capacity in a pH region with a pKa lower than the pKa of a functional group (for example, a carboxy group) that stably disperses particles in the ink.

- Polyvalent metal compound -

Examples of the polyvalent metal compound include a polyvalent metal salt.

Examples of the polyvalent metal salt include an organic acid polyvalent metal salt and an inorganic acid polyvalent metal salt.

A polyvalent metal salt of the organic acid (for example, formic acid, acetic acid, or benzoic acid) described above is preferable as the organic acid polyvalent metal salt.

As the inorganic acid polyvalent metal salt, a nitric acid polyvalent metal salt, a hydrochloric acid polyvalent metal salt, or a thiocyanic acid polyvalent metal salt is preferable.

Examples of the polyvalent metal salt include salts of alkaline earth metals of a group 2 (such as magnesium and calcium) in the periodic table, salts of transition metals of a group 3 (such as lanthanum) in the periodic table, salts of metals of a group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

Further, it is preferable that at least a part of the polyvalent metal compound is dissociated into polyvalent metal ions and counterions in the pretreatment liquid.

- Metal complex -

It is preferable that the metal complex contains at least one selected from the group consisting of zirconium, aluminum, and titanium as a metal element.

As the metal complex, a metal complex including at least one selected from the group consisting of acetate, acetylacetonate, methylacetoacetate, ethylacetoacetate, octylene glycolate, butoxy acetyl acetonate, lactate, a lactate ammonium salt, and triethanol aminate as a ligand is preferable.

The metal complex may be a commercially available product. Further, various organic ligands, particularly various multidentate ligands that are capable of forming metal chelate catalysts are commercially available. Accordingly, the metal complex may be a metal complex prepared by combining a commercially available organic ligand with a metal.

- Cationic polymer -

It is preferable that the cationic polymer is a homopolymer of a cationic monomer containing a primary to tertiary amino group or a quaternary ammonium base, or a copolymer or a condensed polymer of a cationic monomer and a non-cationic monomer. The cationic polymer may be used in any form of a water-soluble polymer or a water-insoluble polymer (that is, latex particles).

Examples of the cationic polymer include a polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of the viscosity of the pretreatment liquid, it is preferable that the weight-average molecular weight of the cationic polymer is small. In a case where the pretreatment liquid is applied to the resin base material by an inkjet recording system, the weight-average molecular weight thereof is preferably in a range of 1,000 to 500,000, more preferably in a range of 1,500 to 200,000, and still more preferably in a range of 2,000 to 100,000. It is advantageous that the weight-average molecular weight thereof is 1,000 or greater from the viewpoint of aggregation rate. It is advantageous that the weight-average molecular weight thereof is 500,000 or less from the viewpoint of jetting reliability. However, the weight-average molecular weight thereof is not limited thereto in a case where the pretreatment liquid is applied to the resin base material by a method other than the inkjet recording system.

The content of the aggregating agent in the pretreatment liquid is preferably in a range of 0.1% by mass to 40% by mass, more preferably in a range of 0.1% by mass to 30% by mass, still more preferably in a range of 1% by mass to 20% by mass, and even still more preferably in a range of 1% by mass to 10% by mass with respect to the total amount of the pretreatment liquid.

(Water-soluble organic solvent)

The pretreatment liquid may contain at least one water-soluble organic solvent.

Examples of the water-soluble organic solvent that can be contained in the pretreatment liquid include the same water-soluble organic solvents contained in the first ink as described below.

Here, in this case, the water-soluble organic solvent in the pretreatment liquid may be the same as or different from the water-soluble organic solvent in the first ink.

The content of the water-soluble organic solvent is preferably 20% by mass or less and more preferably 10% by mass or less with respect to the total amount of the pretreatment liquid.

The content of the water-soluble organic solvent may be 0% by mass. That is, the pretreatment liquid may contain no water-soluble organic solvent.

In a case where the pretreatment liquid contains a water-soluble organic solvent, the content of the water-soluble organic solvent is preferably in a range of 1% by mass to 20% by mass and more preferably in a range of 3% by mass to 10% by mass with respect to the total amount of the pretreatment liquid.

(Resin X)

The pretreatment liquid may contain at least one resin other than the cationic polymer (hereinafter, also referred to as "resin X").

Examples of the resin X include a polyester resin, a polyurethane resin, an acrylic resin, a polyamide resin, a polyurea resin, a polycarbonate resin, a polyolefin resin, and a polystyrene resin.

At least one of an acrylic resin, a polyester resin, or a polyurethane resin is preferable as the resin X.

In the present disclosure, the acrylic resin indicates a polymer (a homopolymer or a copolymer) of a raw material monomer containing at least one selected from the group consisting of acrylic acid, a derivative of acrylic acid (such as acrylic acid ester), methacrylic acid, and a derivative of methacrylic acid (such as methacrylic acid ester).

The weight-average molecular weight (Mw) of the resin X is preferably in a range of 1,000 to 300,000, more preferably in a range of 2,000 to 200,000, and still more preferably in a range of 5,000 to 100,000.

In the present disclosure, the weight-average molecular weight (Mw) indicates a value measured according to gel permeation chromatography (GPC) unless otherwise specified.

The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. Further, the measurement is performed under measurement conditions of a sample concentration of 0.45% by mass, a flow rate of 0.35 ml/min, a sample injection volume of 10 $\mu$l, and a measurement temperature of 40°C using an RI detector.

Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

A form of resin particles is preferable as the form of the resin X in the pretreatment liquid.

That is, it is preferable that the pretreatment liquid contains resin particles as the resin X.

It is preferable that the resin X in this case is a water-insoluble resin.

In the present disclosure, the term "water-insoluble" indicates a property in which the amount of a substance to be dissolved in 100 g of water at 25°C is less than 1.0 g (more preferably less than 0.5 g).

The volume average particle diameter of the resin particles serving as the resin X is preferably in a range of 1 nm to 300 nm, more preferably in a range of 3 nm to 200 nm, and still more preferably in a range of 5 nm to 150 nm.

In the present disclosure, the volume average particle diameter indicates a value measured using a laser diffraction scattering type particle size distribution analyzer.

As a measuring device, a particle size distribution measuring device "MICROTRAC MT-3300II" (manufactured by Nikkiso Co., Ltd.) is exemplified.

Preferred examples of the resin particles serving as the resin X include acrylic resin particles, ester resin particles, a mixture of acrylic resin particles and ester resin particles, composite particles containing an acrylic resin and an ester resin, and polyurethane resin particles.

The content of the resin X in the pretreatment liquid is not particularly limited.

The content of the resin X is preferably in a range of 0.5% by mass to 30% by mass, more preferably in a range of 1% by mass to 20% by mass, and particularly preferably in a range of 1% by mass to 15% by mass with respect to the total amount of the pretreatment liquid.

(Surfactant)

The pretreatment liquid may contain at least one surfactant.

The kind of the surfactant is not particularly limited, and may be any of an anionic surfactant, a cationic surfactant, a betaine-based surfactant, or a nonionic surfactant. Further, examples of the surfactant include an acrylic surfactant, a fluorine-based surfactant, and a silicone-based surfactant.

The content of the surfactant is preferably in a range of 0.1% by mass to 5% by mass and more preferably in a range of 0.2% by mass to 1% by mass with respect to the total amount of the pretreatment liquid.

(Other components)

The pretreatment liquid may contain other components as necessary in addition to the above-described components.

Examples of other components that can be contained in the pretreatment liquid include known additives such as a solid wetting agent, colloidal silica, an inorganic salt, a fading inhibitor, an emulsification stabilizer, a penetration enhancer, an ultraviolet absorbing agent, a preservative, a fungicide, a pH adjuster, a viscosity adjuster, a rust inhibitor, a chelating agent, and a water-soluble polymer compound (for example, water-soluble polymer compounds described in paragraphs 0026 to 0080 of JP2013-001854A).

(Physical properties)

The pH of the pretreatment liquid is preferably in a range of 2.0 to 7.0 and more preferably in a range of 2.0 to 4.0. The pH is measured at 25°C using a pH meter, for example, a pH meter (model number "HM-31", manufactured by DKK-TOA CORPORATION).

From the viewpoint of the coating properties of the pretreatment liquid, the viscosity of the pretreatment liquid is preferably in a range of 0.5 mPa s to 10 mPa s and more preferably in a range of 1 mPa·s to 5 mPa·s. The viscosity is a value measured at 25°C using a viscometer. The viscosity is measured at 25°C using a viscometer, for example, a TV-22 type viscometer (manufactured by Toki Sangyo Co., Ltd.).

The surface tension of the pretreatment liquid is preferably 60 mN/m or less, more preferably in a range of 20 mN/m to 50 mN/m, and still more preferably in a range of 30 mN/m to 45 mN/m. The surface tension is a value measured at a temperature of 25°C. The surface tension is measured at 25°C by a plate method using a surface tension meter, for example, an automatic surface tension meter (product name, "CBVP-Z", manufactured by Kyowa Interface Science Co., Ltd.).

<Step of preparing first ink>

The recording method of the present disclosure includes a step of preparing a first ink which contains water, a water-soluble organic solvent, and a pigment and is one of a colored ink and a white ink.

The step of preparing the first ink may be a step of simply preparing the first ink that has been produced in advance or a step of producing the first ink.

In the present step, only one or two or more kinds of first inks may be prepared.

In a case where the first ink is a white ink (hereinafter, also referred to as "white ink"), only one or two or more kinds of white inks may be prepared in the present step.

In a case where the first ink is a colored ink, for example, at least one colored ink (for example, at least one selected from the group consisting of a cyan ink, a magenta ink, a yellow ink, and a black ink) is prepared in the present step.

Hereinafter, each component that can be contained in the first ink will be described.

(Water)

The first ink contains water.

The content of water is preferably 10% by mass or greater, more preferably 20% by mass or greater, still more preferably 30% by mass or greater, and particularly preferably 50% by mass or greater with respect to the total amount of the first ink.

The upper limit of the content of water is appropriately determined according to the content of other components, and is, for example, 99% by mass, preferably 95% by mass, and more preferably 90% by mass with respect to the total amount of the first ink.

(Water-soluble organic solvent)

The first ink contains a water-soluble organic solvent.

In this manner, the jetting stability from the inkjet head is ensured.

The water-soluble organic solvent contained in the first ink may be used alone or in combination of two or more kinds thereof.

In the present disclosure, the term "water-soluble" indicates a property that 1 g or greater of a substance is dissolved in 100 g of water at 25°C.

In the present disclosure, the term "water-insoluble" indicates a property that less than 1 g of a substance is dissolved in 100 g of water at 25°C.

The kind of the water-soluble organic solvent which can be contained in the first ink is not particularly limited, and examples thereof include a monoalcohol having 1 to 4 carbon atoms; a diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol; a triol such as glycerin, 1,2,6-hexanetriol, or trimethylolpropane; alkylene glycol such as ethylene glycol or propylene glycol; alkylene glycol monoalkyl ether such as ethylene glycol monoalkyl ether or propylene glycol monoalkyl ether; polyalkylene glycol such as diethylene glycol, triethylene glycol, tetraethylene glycol, pentaethylene glycol, dipropylene glycol, or polyoxyethylene polyoxypropylene glycol; polyalkylene glycol ether such as diethylene glycol monoalkyl ether, triethylene glycol monoalkyl ether, tripropylene glycol monoalkyl ether, or polyoxypropylene glyceryl ether; 2-pyrrolidone, and N-methyl-2-pyrrolidone.

From the viewpoint of the jetting stability, it is preferable that the water-soluble organic solvent in the first ink includes at least one selected from the group consisting of alkylene glycol and alkylene glycol monoalkyl ether.

The content of the water-soluble organic solvent is preferably in a range of 10% by mass to 40% by mass and more preferably in a range of 15% by mass to 30% by mass with respect to the total amount of the first ink.

(Pigment)

The first ink contains a pigment.

In a case where the first ink is a colored ink, the first ink contains a color pigment as a pigment.

In a case where the first ink is a white ink, the first ink contains a white pigment as a pigment.

(Color pigment)

In the present disclosure, the color pigment denotes a chromatic pigment or a black pigment.

In the present disclosure, the colored ink denotes a chromatic ink (for example, a cyan ink, a magenta ink, or a yellow ink) or a black ink.

A commercially available organic pigment or inorganic pigment may be used as the color pigment.

Examples of the color pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

Further, the color pigment may be a water-insoluble pigment that can be dispersed in water by a dispersing agent, or may be a self-dispersing pigment.

The self-dispersing pigment is a pigment that can be dispersed in water without using a dispersing agent.

The self-dispersing pigment is, for example, a compound in which at least one selected from the group consisting of hydrophilic groups such as a carbonyl group, a hydroxyl group, a carboxyl group, a sulfo group, and a phosphoric acid group and salts thereof is chemically bonded to a surface of a pigment directly or via another group.

The kind of the color pigment is not particularly limited, and examples thereof include a cyan pigment, a magenta pigment, a yellow pigment, and a black pigment.

From the viewpoints of the image density and the jettability of the first ink, in a case where the first ink contains a color pigment, the content of the color pigment is preferably in a range of 1% by mass to 20% by mass, more preferably in a range of 1% by mass to 15% by mass, and still more preferably in a range of 1% by mass to 10% by mass with respect to the total amount of the first ink.

- White pigment -

Examples of the white pigment include inorganic pigments such as titanium dioxide, barium sulfate, calcium carbonate, silica, zinc oxide, zinc sulfide, mica, talc, and pearl.

Among these, the white pigment is preferably titanium dioxide, barium sulfate, calcium carbonate, or zinc oxide and more preferably titanium dioxide.

From the viewpoint of the covering property, the average primary particle diameter of the white pigment is preferably 150 nm or greater and more preferably 200 nm or greater. Further, from the viewpoint of the jettability of the ink, the average primary particle diameter of the white pigment is preferably 400 nm or less and more preferably 350 nm or less.

In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by a TEM, measuring the primary particle diameters of 50 particles, and averaging the measured diameters. As the transmission electron microscope, a transmission electron microscope 1200EX (manufactured by JEOL Ltd.) can be used.

From the viewpoints of the image density and j ettability, in a case where the first ink contains a white pigment, the content of the white pigment is preferably in a range of 2% by mass to 25% by mass, more preferably in a range of 5% by mass to 25% by mass, and still more preferably in a range of 10% by mass to 20% by mass with respect to the total amount of the first ink.

(Pigment dispersing resin)

The first ink may contain at least one pigment dispersing resin.

In the present disclosure, the pigment dispersing resin is a resin having a function of dispersing a pigment.

The pigment dispersing resin may be a random copolymer or a block copolymer.

Further, the pigment dispersing resin may have a crosslinking structure.

The first ink may be prepared using a pigment dispersion liquid containing a pigment and a pigment dispersing resin.

As the pigment dispersing resin, for example, known polymer dispersing agents such as polymer dispersing agents described in paragraphs 0029 to 0106 of WO2021/221069A can be used.

In a case where the first ink contains the pigment dispersing resin, the ratio of the content of the pigment to the content of the pigment dispersing resin in the first ink is preferably in a range of 1:0.04 to 1:3, more preferably in a range of 1:0.05 to 1:1, and still more preferably in a range of 1:0.05 to 1:0.5 on a mass basis.

In a case where the first ink contains the pigment dispersing resin, the content of the pigment dispersing resin is preferably in a range of 0.1% by mass to 10% by mass, more preferably in a range of 0.3% by mass to 5% by mass, and still more preferably in a range of 0.5% by mass to 2.5% by mass with respect to the total amount of the first ink.

(Resin particles)

The first ink may contain at least one kind of resin particles.

Examples of the resin particles that can be contained in the first ink include the same resin particles that can be contained in the pretreatment liquid.

Here, the resin particles in the first ink may be the same as or different from the resin particles in the pretreatment liquid.

In a case where the first ink contains a resin, it is preferable that the first ink contains at least one kind of resin particles.

It is preferable that the resin particles are at least one selected from the group consisting of acrylic resin particles, ester resin particles, a mixture of acrylic resin particles and ester resin particles, composite particles containing an acrylic resin and an ester resin, and polyurethane resin particles.

The content of the resin particles in the first ink is preferably in a range of 1% by mass to 20% by mass, more preferably in a range of 2% by mass to 15% by mass, and still more preferably in a range of 2% by mass to 10% by mass with respect to the total amount of the first ink.

(Additive)

The first ink may contain additives such as a surfactant, a water-soluble resin, a co-sensitizer, an ultraviolet absorbing agent, an antioxidant, a fading inhibitor, a conductive salt, and a basic compound as necessary.

(Physical properties)

From the viewpoint of improving the jetting stability, the pH (25°C) of the first ink is preferably in a range of 7 to 10 and more preferably in a range of 7.5 to 9.5. The pH of the colored ink can be measured by the same method as that for the pH of the pretreatment liquid.

The viscosity (25°C) of the first ink is preferably in a range of 0.5 mPa s to 30 mPa s, more preferably in a range of 2 mPa s to 20 mPa·s, preferably in a range of 2 mPa s to 15 mPa·s, and even still more preferably in a range of 3 mPa·s to 10 mPa·s. The viscosity of the first ink can be measured by the same method as that for the viscosity of the pretreatment liquid.

The surface tension (25°C) of the first ink is preferably 60 mN/m or less, more preferably in a range of 20 mN/m to 50 mN/m, and still more preferably in a range of 30 mN/m to 45 mN/m.

The surface tension can be measured by the same method as that for the pretreatment liquid.

<Step of preparing second ink>

The recording method of the present disclosure includes a step of preparing a second ink which contains water, a water-soluble organic solvent, and a pigment and is the other of the colored ink and the white ink (that is, the other one which is not the first ink between the colored ink and the white ink).

The step of preparing the second ink may be a step of simply preparing the second ink that has been produced in advance or a step of producing the second ink.

The second ink is the other of the colored ink and the white ink (that is, the other one which is not the first ink between the colored ink and the white ink).

That is, the second ink is a white ink in a case where the first ink is a colored ink, and the second ink is a colored ink in a case where the first ink is a white ink.

In a case where the second ink is a colored ink, the second ink contains a color pigment.

In a case where the second ink is a white ink, the second ink contains a white pigment.

The second ink is the same as the first ink except that the kind of pigment is different from that of the first ink, and the preferable aspects of the second ink are also the same as the preferable aspects of the first ink.

In the present step, only one kind of second ink (for example, only one kind of white ink (hereinafter, also referred to as a white ink)) may be prepared, or two or more kinds of second inks (for example, two or more kinds selected from the group consisting of a cyan ink, a magenta ink, a yellow ink, and a black ink) may be prepared.

In a case where the second ink is a white ink, in this step, only one kind of white ink may be prepared, or two or more kinds of the white inks may be prepared in the present step.

In a case where the second ink is a colored ink, for example, at least one colored ink is prepared in the present step.

The combination of the first ink and the second ink in the recording method of the present disclosure is a combination of the first ink, which is one of the white ink and the colored ink, and the second ink, which is the other of the white ink and the colored ink.

In this manner, a colored image having a white image as a background can be recorded as a multicolor image.

In this case, only one kind of colored ink (for example, one kind selected from the group consisting of a cyan ink, a magenta ink, a yellow ink, and a black ink) or two or more kinds of colored inks (for example, two or more kinds selected from the group consisting of a cyan ink, a magenta ink, a yellow ink, and a black ink) may be used.

In the recording method of the present disclosure, in a case where a combination of at least one colored ink as the first ink and a white ink as the second ink is used as the combination of the first ink and the second ink, the pretreatment liquid, at least one colored ink as the first ink, and the white ink as the second ink are applied in this order onto the resin base material to record a multicolor image.

In this case, a colored image (for example, a pattern image such as a character or a figure) having a white image (for example, a solid image) as a background can be visually recognized through the resin base material from the image non-recording surface side of the resin base material.

Further, in a case where a combination of a white ink as the first ink and at least one colored ink as the second ink is used as the combination of the first ink and the second ink, the pretreatment liquid, the white ink as the first ink, and at least one colored ink as the second ink are applied in this order onto the resin base material to record a multicolor image. In this case, a colored image (for example, a pattern image such as a character or a figure) having a white image (for example, a solid image) as a background can be visually recognized from the image recording surface side of the resin base material.

As the combination of the first ink and the second ink, the combination of at least one colored ink as the first ink and a white ink as the second ink is preferable.

<Applying step>

The recording method of the present disclosure includes an applying step of applying the pretreatment liquid onto the resin base material during transportation in a state where a tension T of 20 N/m or greater is applied thereto and applying the first ink and the second ink in this order onto a region of the resin base material where the pretreatment liquid has been applied respectively by an inkjet recording system.

(Transportation of resin base material)

In the applying step, the pretreatment liquid, the first ink, and the second ink are applied in this order to the resin base material during transportation.

A method of transporting the resin base material is not particularly limited.

Examples of the method of transporting the resin base material include a continuous transportation method (for example, a roll-to-roll method) using a resin base material having a long film shape.

From the viewpoint of the speed of image recording, the transportation speed of the resin base material is preferably 60 m/min or greater.

Further, in general, in a case where the transportation speed of the resin base material is as high as 60 m/min or greater, transportation flutter is likely to occur, and as a result, streak defects may occur in the multicolor image.

However, in the image recording of the present disclosure, since the tension T of the resin base material in the applying step is 20 N/m or greater, the transportation flutter can be suppressed even in a case where the transportation speed of the resin base material is as high as 60 m/min or greater, and as a result, streak defects in the multicolor image can be suppressed.

The transportation speed of the resin base material is more preferably 60 m/min or greater and 150 m/min or less.

In a case where the transportation speed of the resin base material is 150 m/min or less, transportation flutter of the resin base material and streak defects in the multicolor image can be more effectively suppressed.

The tension T of the resin base material in the applying step is 20 N/m or greater.

The preferable ranges of the tension T are as described above.

A method of adjusting the tension T applied to the resin base material is not particularly limited, and a known method can be employed. The tension T may be adjusted, for example, by adjusting the rotation speed of the feeding roll and the rotation speed of the winding roll in a case where the resin base material is transported by a roll-to-roll method. In addition, the tension T may be adjusted by using a tension adjusting device such as a tension roller or a dancer roller.

(Application of pretreatment liquid)

In the applying step, the pretreatment liquid is applied onto the resin base material during transportation in a state where a tension T of 20 N/m or greater is applied thereto.

A method of applying the pretreatment liquid is not particularly limited, and examples thereof include known methods such as a coating method, a dipping method, and an inkjet recording system.

Examples of the coating method include known coating methods using a bar coater, an extrusion die coater, an air doctor coater, a blade coater, a rod coater, a knife coater, a squeeze coater, and a reverse roll coater.

(Heating and drying pretreatment liquid)

The applying step may include heating and drying the pretreatment liquid applied onto the resin base material before the application of the first ink.

Examples of the means for heating and drying the pretreatment liquid include known heating means such as a heater, known air blowing means such as a dryer, and means for combining these.

Examples of the method of heating and drying the pretreatment liquid include a method of applying heat using a heater or the like from a side of the resin base material opposite to the surface onto which the pretreatment liquid has been applied; a method of applying warm air or hot air to the surface of the resin base material onto which the pretreatment liquid has been applied; a method of applying heat using an infrared heater from the surface of the resin base material onto which the pretreatment liquid has been applied or from a side of the resin base material opposite to the surface onto which the pretreatment liquid has been applied; and a method of combining a plurality of these methods.

The heating temperature of heating and drying the pretreatment liquid is preferably 35°C or higher and more preferably 40°C or higher. The upper limit of the heating temperature is not particularly limited, but is preferably 100°C, more preferably 90°C, and still more preferably 70°C.

The time of heating and drying the pretreatment liquid is not particularly limited, but is preferably in a range of 0.5 seconds to 60 seconds, more preferably in a range of 0.5 seconds to 20 seconds, and still more preferably in a range of 0.5 seconds to 10 seconds.

(Application of first ink and second ink)

In the applying step, the first ink and the second ink are applied in this order to the region of the resin base material where the pretreatment liquid has been applied respectively by the ink jet recording system.

The components in the first ink and the components in the ink are aggregated, by performing the present step, on the resin base material due the action of the aggregating agent in the pretreatment liquid, and a multicolor image including a first image which is an image derived from the first ink and a second image which is an image derived from the second ink is obtained.

A method of jetting the ink (that is, the first ink or the second ink, the same applies hereinafter) using an ink jet recording system is not particularly limited, and known methods such as an electric charge control method of jetting an ink using an electrostatic attraction force; a drop-on-demand method (pressure pulse method) using a vibration pressure of a piezoelectric element; an acoustic inkjet method of jetting an ink using a radiation pressure by converting an electric signal into an acoustic beam and irradiating the ink with the acoustic beam; and a thermal inkjet (bubble jet (registered trademark)) method of heating an ink to form air bubbles and using the generated pressure may be used.

As the ink jet recording system, particularly, an inkjet recording system, described in JP1979-59936A (JP-S54-59936A), of jetting an ink from a nozzle using an action force caused by a rapid change in volume of the ink after being subjected to an action of thermal energy can be effectively used. Further, as the inkjet recording system, the method described in paragraphs 0093 to 0105 of JP2003-306623A can also be employed.

The ink is applied by jetting the ink from a nozzle of an inkjet head.

Examples of the system of the ink jet head include a shuttle system of performing recording while a short serial head performs scanning in the width direction of the resin base material and a line system of using a line head in which recording elements are aligned in correspondence with the entire area of one side of the resin base material.

In the line system, image recording can be performed on the entire surface of the resin base material by scanning the resin base material in a direction intersecting the direction in which the recording elements are aligned. In the line system, a transport system such as a carriage that scans a short head in the shuttle system is not necessary. Further, in the line system, since movement of a carriage and complicated scanning control between the head and the resin base material are not necessary as compared with the shuttle system, only the resin base material moves. Therefore, according to the line system, image recording at a higher speed than that of the shuttle system can be realized.

It is preferable that the application of the ink is performed using an inkjet head having a resolution of 300 dpi or greater (more preferably 600 dpi or greater and still more preferably 800 dpi or greater). Here, dpi stands for dot per inch, and 1 inch is 2.54 cm.

From the viewpoint of obtaining an image with high definition, the ink droplet amount is preferably in a range of 1 picoliter (pL) to 10 pL and more preferably in a range of 1.5 pL to 6 pL.

In the applying step, the expression "the first ink and the second ink are applied in this order" denotes that the first ink is applied first to a point P on the resin base material to be transported, and the second ink is applied onto the applied first ink.

In other words, the first ink and the second ink are applied in this order in an overlapping manner onto the region of the resin base material where the pretreatment liquid has been applied in the applying step.

The first ink and the second ink can be applied, for example, using an inkjet recording device in which a line head for the first ink and a line head for the second ink are disposed in order from an upstream side of the resin base material in the transport direction along a transport path of the resin base material. In this aspect, the first ink and the second ink may be applied simultaneously to different positions of the resin base material to be transported, but the concept of "the first ink and the second ink are applied in this order" includes such a case.

(Heating and drying of first ink)

The applying step may include heating and drying the first ink on the resin base material before the application of the second ink.

A method of heating and drying the first ink is not particularly limited, and examples thereof include infrared (IR) drying, warm air drying, and heating and drying with a heating device (such as a heater, a hot plate, or a heating furnace).

A method of combining two or more of these methods may be used as the method of heating and drying the first ink.

The heating and drying can be performed by heating the first ink from at least one of the image recording surface side or the image non-recording surface side of the resin base material.

The heating temperature in the heating and drying of the first ink is preferably in a range of 30°C to 100°C, more preferably in a range of 35°C to 90°C, and still more preferably in a range of 40°C to 80°C.

The heating time during the heating and drying of the first ink is not particularly limited, but is preferably in a range of 1 second to 180 seconds, more preferably in a range of 1 second to 120 seconds, and still more preferably in a range of 1 second to 60 seconds.

(Heating and drying of second ink)

The applying step may include heating and drying the second ink on the resin base material after the application of the second ink.

The preferable conditions for heating and drying the second ink are the same as the preferable conditions for heating and drying the first ink.

(Cooling of multicolor image)

The applying step may include cooling the multicolor image obtained by applying the pretreatment liquid, the first ink, and the second ink.

Examples of the means for cooling the multicolor image include cooling means such as a cooling roll, air blowing means such as a dryer, natural cooling (air cooling), and means combining these.

Examples of a method of cooling the image include a method of bringing the image forming surface and/or the image non-forming surface of the resin base material A1 into contact with a cooling roll, a method of blowing cool air to the image forming surface of the resin base material A1, a method of disposing the resin base material A1 on which the image has been formed, in a space where the temperature is adjusted to a temperature $T_r$ or lower, and a method of combining a plurality of these methods.

<Example of Ink Jet Recording Device>

Fig. 1 is a view conceptually showing an example of an ink jet recording device used for the ink jet recording method of the present disclosure.

As shown in Fig. 1, the ink jet recording device according to the present example is an example of an ink jet recording device including a transport mechanism that transports the resin base material in a roll-to-roll method, and is a device that unwinds the resin base material A1 having a long film shape wound in a roll shape by a unwinding device W1, transports the unwound resin base material A1 in a direction indicated by a block arrow, causes the unwound resin base material A1 to pass through a pretreatment liquid applying device P1, a pretreatment liquid drying zone DP1, a first inkjet head IJ1, a first drying zone D1, a second inkjet head IJ2, and a drying zone D2 in this order, and finally winds the resin base material A1 by a winding device W2.

The resin base material A1 is transported in a state where the tension T is applied thereto.

The image recording device according to the present example may include a tension adjusting unit for adjusting the tension T.

Examples of the tension adjusting unit include a powder brake provided in the unwinding device W1 and/or the winding device W2, a dancer roll provided in the middle of the transport path, and a control device (for example, a tension controller) that controls each tension by adjusting each condition of the image recording device.

In addition, the image recording device according to the present example may include a tension measuring unit (for example, a tension meter) for measuring the tension T.

Since Fig. 1 is a conceptual view, the transport path of the resin base material A1 is simplified and shown such that the resin base material A1 is transported in one direction, but it goes without saying that the transport path of the resin base material A1 may meander.

The method of transporting the resin base material A1 can be appropriately selected from various web transport methods of using a drum, a roll, and the like.

With respect to the unwinding device W1 for unwinding the resin base material A1, the pretreatment liquid applying device P1, the pretreatment liquid drying zone DP1, the first ink jet head IJ1, the first drying zone D1, the second inkjet head IJ2, and the drying zone D2 are disposed in this order on the downstream side of the resin base material A1 in the transport direction (hereinafter, also simply referred to as "downstream side") from the upstream side of the resin base material A1 in the transport direction (hereinafter, also simply referred to as "upstream side").

The pretreatment liquid, the first ink, and the second ink are respectively applied by the pretreatment liquid applying device P1, the first inkjet head IJ1, and the second inkjet head IJ2.

In this case, at least one of the heating and drying of the pretreatment liquid in the pretreatment liquid drying zone DP1, the heating and drying of the first ink in the first drying zone D1, or the heating and drying of the second ink in the second drying zone D2 can be performed.

In the first drying zone D1, the heating and drying of the pretreatment liquid may be substantially performed in addition to the heating and drying of the first ink.

In the second drying zone D2, the heating and drying of the pretreatment liquid and/or the heating and drying of the first ink may be substantially performed in addition to the heating and drying of the second ink.

Further, in a case where the resin base material passes through each drying zone in a state where the temperature of each drying zone is set to room temperature, the heating and drying can be omitted.

A surface treatment unit (not shown) for performing a surface treatment (preferably, a corona treatment) on the resin base material A1 may be provided on the upstream side of the pretreatment liquid applying device P1.

In addition, a cooling zone for cooling the recorded multicolor image may be provided on the downstream side of the second drying zone D2.

The first inkjet head IJ1 and the second inkjet head IJ2 may be shuttle heads, but from the viewpoint of increasing the speed of image recording, a line head in which a plurality of jetting ports (nozzles) are arranged on the resin base material A1 having a long film shape in the width direction is preferable.

Each of the first inkjet head IJ1 and the second inkjet head IJ2 may be used alone or a plurality of kinds thereof.

Examples of a combination of the first inkjet head IJ1 and the second inkjet head IJ2 include a combination in which the first inkjet head IJ1 is formed of four inkjet heads corresponding to four colors of cyan, magenta, yellow, and black (note; these four ink jet heads are arranged in the transport direction of the resin base material) and the second ink jet head IJ2 is formed of one inkjet head corresponding to white.

Further, other examples of the combination of the first inkjet head IJ1 and the second inkjet head IJ2 include a combination in which the first inkjet head IJ1 is formed of one ink jet head corresponding to white and the second inkjet head IJ2 is formed of four inkjet heads corresponding to four colors of cyan, magenta, yellow, and black (note; these four ink jet heads are arranged in the transport direction of the resin base material).

In the inkjet recording performed by using the image recording device according to the present example, first, the resin base material A1 having a long film shape, which is wound in a roll shape, is unwound by the unwinding device W1, the unwound resin base material A1 is transported in a direction indicated by a block arrow in a state where a tension T of 20 N/m or greater is applied thereto, the pretreatment liquid is applied to the resin base material A1 during transportation by the pretreatment liquid applying device P1, the pretreatment liquid is dried in the pretreatment liquid drying zone DP1 as necessary, the first ink is applied by the first inkjet head IJ1, the first ink is dried in the first drying zone D1 as necessary, the second ink is applied by the second ink jet head IJ2, and the second ink is dried in the second drying zone D2 as necessary. In this manner, a multicolor image including a first image derived from the first ink and a second image derived from the second ink is obtained.

Next, the obtained multicolor image is cooled as necessary, and the resin base material A1 with the multicolor image is finally wound by the winding device W2.

In the present example, the value X defined by Equation (X) is adjusted to be 80 or greater in the inkjet recording. In this manner, the elongation of the resin base material A1 between the first ink jet head IJ1 and the second ink jet head IJ2 is suppressed, and as a result, the intercolor misregistration is suppressed.

Examples

Hereinafter, the present disclosure will be described in more detail based on examples, but the present disclosure is not limited to the following examples unless the gist thereof is overstepped.

[Example 1]

<Preparation of pretreatment liquid>

The components described below were mixed to prepare a pretreatment liquid.

- Composition of pretreatment liquid -

- Glutaric acid [aggregating agent]: 6.1% by mass
- Propylene glycol (PG) [water-soluble organic solvent]: 20% by mass
- OLFINE E1010 (manufactured by Nissin Chemical Industry Co., Ltd.) [surfactant]: 0.5% by mass
- SUPERFLEX 500M (manufactured by DKS Co., Ltd.) [aqueous dispersion of urethane resin particles]: 7.0% by mass
- Triisopropanolamine [pH adjuster]: 0.2% by mass
- BYK024 (manufactured by BYK-Chemie GmbH) [antifoaming agent]: 0.01% by mass
- Ultrapure water: remaining amount set such that total amount of pretreatment liquid reached 100% by mass

<Preparation of first ink (cyan ink)>

The following components were mixed to prepare a cyan ink as the first ink.

- Composition of first ink (cyan ink) -

- APD4000 Cyan (manufactured by Fujifilm Imaging Colorants Ltd.) [cyan pigment dispersion liquid]: 4.0% by mass in terms of content of cyan pigment
- Propylene glycol monomethyl ether (PGmME) [water-soluble organic solvent]: 3% by mass
- Propylene glycol (PG) [water-soluble organic solvent]: 20% by mass
- NeoCryl A-1105 (manufactured by DSM) [acrylic resin particle dispersion liquid]: 5.0% by mass in terms of content of resin particles
· OLFINE E1010 (manufactured by Nissin Chemical Co., Ltd.) [acetylene glycol-based surfactant]: 1.0% by mass
· BYK3450 (manufactured by BYK-Chemie GmbH) [silicon-based surfactant]: 1.0% by mass
· PVPK15 (polyvinylpyrrolidone K15): 0.15% by mass
· ST-XS (manufactured by Nissan Chemical Corporation) [colloidal silica dispersion liquid]: 0.05% by mass in terms of content of colloidal silica particles
· Water: remaining amount such that total amount of ink reached 100% by mass

<Preparation of second ink (white ink)>

The following components were mixed to prepare a white ink as a second ink.

- Composition of second ink (white ink) -

· White pigment dispersion liquid shown below: 10.0% by mass in terms of content of white pigment
· Propylene glycol (PG) [water-soluble organic solvent]: 25.0% by mass
· Propylene glycol monomethyl ether (PGmME) [water-soluble organic solvent]: 2.0% by mass
· NeoCryl A-1105 (manufactured by DSM) [acrylic resin particle dispersion liquid]: 5.0% by mass in terms of content of resin particles
· OLFINE E1010 (manufactured by Nissin Chemical Co., Ltd.) [acetylene glycol-based surfactant]: 1.0% by mass
· BYK3450 (manufactured by BYK-Chemie GmbH) [silicon-based surfactant]: 1.0% by mass
· PVPK15 (polyvinylpyrrolidone K15): 0.15% by mass
· ST-XS (manufactured by Nissan Chemical Corporation) [colloidal silica dispersion liquid]: 0.05% by mass in terms of content of colloidal silica particles
· Water: remaining amount such that total amount of ink reached 100% by mass

(Preparation of white pigment dispersion liquid)

- Synthesis of pigment dispersing agent P1 -

965 g of dipropylene glycol was added to a 5,000 mL three-neck flask provided with a stirrer and a cooling pipe and heated to 85°C in a nitrogen atmosphere.

A solution I obtained by dissolving 640 g of benzyl methacrylate, 340 g of methacrylic acid, and 19.94 g of 2-mercaptopropionic acid in 370.28 g of dipropylene glycol, and a solution II obtained by dissolving 17.69 g of t-butyl peroxy-2-ethylhexanoate (product name, "PERBUTYL O", manufactured by NOF Corporation) in 221.17 g of dipropylene glycol were respectively prepared.

The solution I was added dropwise to the three-neck flask for 4 hours, and the solution II was added dropwise thereto for 5 hours. After completion of the dropwise addition, the solution was allowed to further react for 2 hours. The disappearance of the monomers was confirmed by 1H-NMR.

The obtained reaction solution was heated to 70°C, 248.02 g of a 50 mass% potassium hydroxide aqueous solution was added thereto, 107.48 g of dipropylene glycol and 75.52 g of pure water were added thereto, and the solution was stirred, thereby obtaining a 37 mass% solution of a random polymer. This random polymer was defined as a pigment dispersing agent P1.

The structural units constituting the obtained random polymer were confirmed by 1H-NMR. In addition, the weight-average molecular weight (Mw) was acquired by GPC. The weight-average molecular weight (Mw) of the obtained pigment dispersing agent P1 was 8,400, and the acid value thereof was 221.7 mgKOH/g.

- Preparation of white pigment dispersion liquid -

The pigment dispersing agent P1 (150 parts by mass) was dissolved in water to prepare a polymer solution in which the concentration of the pigment dispersing agent P1 was 25% by mass.

96 parts by mass of the polymer solution, 300 parts by mass of C.I. Pigment White 6 (trade name, "JR-405", manufactured by Tayca Co., Ltd., titanium dioxide particles) as a white pigment, and 270 parts by mass of water were mixed to obtain a mixed solution. A potassium hydroxide aqueous solution was added to the obtained mixed solution, and the pH after neutralization was adjusted to 8.7.

Next, the mixed solution after neutralization was subjected to a dispersion treatment for 3 hours using a beads mill (bead diameter: 0.1 mmφ, zirconia beads). In this manner, a white pigment dispersion liquid (uncrosslinked dispersion liquid) PD1 in which the white pigment was dispersed by the pigment dispersing agent P1 was obtained.

Next, ultrafiltration was performed by allowing ion exchange water to flow through the obtained white pigment dispersion liquid (uncrosslinked dispersion liquid) PD1 at a flow rate of 600 mL per minute using an ultrafiltration device (cross-flow type ultrafilter (UF), manufactured by Sartorius AG). The liquid temperature was maintained at 25°C, and the ultrafiltration was performed three times by setting one time the volume of the charged liquid to once. Ion exchange water was added to the liquid after the ultrafiltration, thereby obtaining a dispersion liquid after ultrafiltration in which the concentration of the white pigment was 45% by mass and the concentration of the pigment dispersing agent P1 was 3.6% by mass.

1.35 parts by mass of trimethylolpropane polyglycidyl ether (product name, "Denacol EX-321", manufactured by Nagase ChemteX Corporation) as a crosslinking agent and 14.5 parts by mass of a boric acid aqueous solution (concentration of boric acid: 4% by mass) were added to 136 parts by mass of the dispersion liquid after ultrafiltration, and the mixture was allowed to react at 70°C for 6 hours and cooled to 25°C. In this manner, the pigment dispersing agent P1 in the dispersion liquid was crosslinked to form a pigment dispersing agent P1a serving as a crosslinked polymer dispersing agent, thereby obtaining a white pigment dispersion liquid (crosslinked dispersion liquid) in which the white pigment was dispersed by the pigment dispersing agent P1a.

Ion exchange water was added to the obtained crosslinked dispersion liquid such that the concentration of the pigment was set to 15% by mass. Ultrafiltration was performed by allowing the crosslinked dispersion liquid to which ion exchange water had been added to flow into an ultrafiltration device (cross-flow type ultrafilter (UF), manufactured by Sartorius AG) provided with a polyether sulfone (PESU) film (size of micropores: 0.1 μm) at a flow rate of 600 mL per minute. At this time, the liquid temperature was adjusted to 25°C, and the ultrafiltration was performed three times by setting 1 time the volume magnification of the charged liquid as once. Next, ion exchange water was added such that the concentration of the white pigment was set to 45% by mass. In this manner, a white pigment dispersion liquid was obtained.

The acid value of the pigment dispersing agent P1a contained in the white pigment dispersion liquid was 144 mgKOH/g. Further, the concentration of the pigment dispersing agent P1a was 3.6% by mass.

<Preparation of resin base material>

A polyethylene terephthalate (PET) base material "FE2001 (thickness: 23 μm)" (manufactured by Futamura Chemical Co., Ltd.) was prepared as the resin base material.

Here, "FE2001 (thickness: 23 μm)" is a roll body in which a PET base material with a thickness of 23 μm, a width of 580 mm, and a length of 2,000 m is wound in a roll shape.

<Ink jet recording>

(Preparation of ink jet recording device)

As the inkjet recording device used for the evaluation, an inkjet recording device shown in Fig. 1 according to the above-described example was prepared.

A gravure coater was used as the pretreatment liquid applying device P1.

The drying method in the pretreatment liquid drying zone DP1 was drying with warm air.

As the first ink jet head IJ1, four ink jet heads for black, cyan, magenta, and yellow were arranged in this order from the upstream side (that is, the upstream side of the resin base material in the transport direction).

An inkjet head for white was disposed as the second inkjet head IJ2.

All the inkjet heads and the conditions for jetting the ink were as follows.

· Inkjet head: 1,200 dpi (dot per inch, 1 inch is 2.54 cm)/20-inch width piezo full line head (total number of nozzles: 2,048) was used
· Ink droplet amount: set to 2.0 pL
· Driving frequency: set to 30 kHz

The drying method in each of the first drying zone D1 and the second drying zone D2 was drying with warm air.

An air cooling zone (not shown) was provided between the second drying zone D2 and the winding device W2.

A tension controller ("LE-40MTA", manufactured by Mitsubishi Electric Corporation) was incorporated in the ink jet recording device, and thus the tension T applied to the resin base material was controlled in the inkjet recording described below.

(Inkjet recording)

A resin base material with a multicolor image was obtained by performing inkjet recording described below using the ink jet recording device, the pretreatment liquid, a cyan ink as the first ink, and a white ink as the second ink described above.

First, the resin base material was unwound from the roll body by the unwinding device W1, the unwound resin base material was transported in a state where the tension T was applied thereto, the pretreatment liquid was applied to the resin base material during transportation by a gravure coater serving as the pretreatment liquid applying device P1, the pretreatment liquid was dried in the pretreatment liquid drying zone DP1, the cyan ink serving as the first ink was applied by the first ink jet head IJ1, the first ink was dried in the first drying zone D1, the white ink serving as the second ink was applied by the second ink jet head IJ2, and the second ink was dried in the second drying zone D2.

A multicolor image including a first image derived from the first ink and a second image derived from the second ink was recorded on the resin base material during transportation by performing the above-described operation, thereby obtaining a resin base material with the multicolor image.

Next, the obtained resin base material with the multicolor image was air-cooled and wound by the winding device W2.

In the inkjet recording, the transportation speed of the resin base material was set to 70 m/min.

The tension T of the resin base material, the amount (g/m$^2$) of the pretreatment liquid applied, and the amount (g/m$^2$) of the first ink applied were set to the values listed in Table 2.

The amount of the second ink applied was 3.8 g/m$^2$.

The pretreatment liquid was dried under the conditions of 40°C and 3 seconds.

The first ink was dried under the conditions of 70°C and 20 seconds.

The second ink was dried under the conditions of 70°C and 20 seconds.

<Calculation of value X represented by Equation (X)>

The amount (g/m$^2$) of the water-soluble organic solvent applied in the pretreatment liquid and the first ink (A in Equation (X)) was calculated based on the content of the water-soluble organic solvent in the pretreatment liquid, the amount of the pretreatment liquid applied, the content of the water-soluble organic solvent in the first ink, and the amount of the first ink applied.

In addition, the HSP distances (ΔHSP in Equation (X)) between the water-soluble organic solvent in the pretreatment liquid and the first ink and the resin base material was calculated.

The value X defined by Equation (X) [value X = (d/A) × ΔHSP] was calculated from these A and ΔHSP, and the thickness (d) of the resin base material.

These results are shown in Table 2.

<Evaluation>

The following evaluations were performed by carrying out inkjet recording described above.

The results are listed in Table 2.

(Intercolor misregistration)

Images for evaluating intercolor misregistration were recorded by the inkjet recording.

The image for evaluating intercolor misregistration was a multicolor image in which the second image (that is, a white image) having the same shape and the same size as those of the first image overlapped with the first image (that is, a cyan image) having a square shape with one side having a length of 20.0 mm.

In the obtained images for evaluating intercolor misregistration, the droplet misregistration (that is, a deviation of the actual droplet position from the intended droplet position) of the second image (that is, the white image) with respect to the first image (that is, the cyan image) was confirmed, and the intercolor misregistration was evaluated according to the following evaluation standards.

In the following evaluation standards, the rank of the most suppressed intercolor misregistration is AA.

The droplet misregistration is a deviation caused by the elongation of the resin base material after the application of the first ink and before the application of the second ink.

- Evaluation standards for intercolor misregistration -

AA: The droplet misregistration was less than 0.1 mm.

A: The droplet misregistration was 0.1 mm or greater and less than 0.5 mm.

B: The droplet misregistration was 0.5 mm or greater and less than 1.0 mm.

C: The droplet misregistration is 1.0 mm or greater and less than 3.0 mm.

D: The droplet misregistration was 3.0 mm or greater.

(Streak defects)

Images for evaluating streak defects were recorded by the inkjet recording.

The image for evaluating streak defects was a multicolor image in which the second image (that is, a white image) as a solid image overlapped with the first image (that is, a cyan image) as a solid image.

Streak defects, which are streak-like defects in the transport direction, were visually observed in an observation region with a size of 100 mm × 100 mm in the image for evaluating streak defects, and the number thereof was investigated. Based on the obtained results, the streak defects were evaluated according to the following evaluation standards.

In the following evaluation standards, the rank of the most suppressed streak defects is AA.

- Evaluation standards for streak defects -

AA: The number of streak defects was 0.

A: The number of streak defects was 1 and less than 4.

B: The number of streak defects was 4 and less than 8.

C: The number of streak defects was 8 and less than 15.

D: The number of streak defects was 15 or greater.

(Jetting recovering properties)

The first ink was jetted from the first inkjet head to record a cyan solid image using the ink j et recording device, and the j etting of the first ink from the first inkjet head was suspended for 1 minute. After the suspension, the first ink was jetted from the first inkjet head again to record a cyan solid image. The number of liquid droplets required until the jettability of the first ink (that is, the dot shape, the dot size, and the droplet position) was recovered was confirmed in the jetting after the suspension, and the jetting recovering properties of the first ink were evaluated based on the following evaluation standards.

In the following evaluation standards, the rank of the most excellent jetting recovering properties of the first ink is A.

- Evaluation standards for jetting recovering properties

A: The number of liquid droplets until the j ettability of the first ink was recovered was less than 2.

B: The number of liquid droplets until the jettability of the first ink was recovered was 2 or greater and less than 5.

C: The number of liquid droplets until the jettability of the first ink was recovered was 5 or greater and less than 10.

D: The number of liquid droplets until the j ettability of the first ink was recovered was 10 or greater.

(Intercolor bleeding)

Images for evaluating intercolor bleeding were recorded by the inkjet recording.

The image for evaluating intercolor bleeding was a multicolor image including the first image (that is, a cyan image) as a solid image with a size of 10 cm × 10 cm and the second image (that is, a white image) as a solid image with a size of 10 cm × 10 cm adjacent to the first image.

The vicinity of a boundary portion between the first image and the second image in the obtained image for evaluating intercolor bleeding was visually observed, and the intercolor bleeding was evaluated according to the following evaluation standards.

In the following evaluation standards, the rank of the most suppressed intercolor bleeding is A.

- Evaluation standards for intercolor bleeding

A: Intercolor bleeding was not confirmed in the vicinity of the boundary portion between the first image and the second image.
B: Intercolor bleeding was partially confirmed in the vicinity of the boundary portion between the first image and the second image.
C: Intercolor bleeding was confirmed in the entire vicinity of the boundary portion between the first image and the second image.

[Examples 2 to 19 and Comparative Examples 1 and 2]

The same operation as in Example 1 was performed except that combinations of the kind of the resin of the resin base material, the thickness (d) of the resin base material, the tension T applied to the resin base material, the kind and the content of the water-soluble organic solvent in the pretreatment liquid, the kind and the content of the water-soluble organic solvent in the first ink, the amount of the pretreatment liquid applied, and the amount of the first ink applied were changed as listed in Tables 2 to 4. The results are listed in Tables 2 to 4.

The abbreviations of the solvents in Tables 2 to 4 can refer to the description of Table 1.

The resin base materials are as follows.

Nyron: simultaneous biaxially oriented nylon base material "EMBLEM (registered trademark) ON-15" (manufactured by Unitika Ltd., roll body in which a nylon base material having a thickness of 25 $\mu$m, a width of 580 mm, and a length of 2,000 m was wound in a roll shape)
OPP: biaxially oriented polypropylene (OPP) base material "FOR-AQ" (manufactured by Futamura Chemical Co., Ltd., roll body in which an OPP base material having a thickness of 20 $\mu$m, a width of 580 mm, and a length of 2,000 m was wound in a roll shape)

[Table 2]

| | | | Example 1 | Example 2 | Example 3 | Example 4 | Example 5 | Example 6 | Example 7 | Example 8 | Example 9 |
|---|---|---|---|---|---|---|---|---|---|---|---|
| Resin base material | | Resin | PET | PET | OPP | Nylon | PET | PET | PET | PET | PET |
| | | Thickness ($\mu$m): d in Equation (X) | 23 | 23 | 20 | 25 | 23 | 23 | 23 | 23 | 23 |
| | | Tension T (N/m) | 70 | 70 | 70 | 70 | 70 | 70 | 70 | 70 | 70 |
| Water-soluble solvent species in pretreatment liquid and content thereof (% by mass) | | PGmME | | | | | | | 10 | | |
| | | PGmPE | | | | | | | | | 40 |
| | | EG | | | | | | | | 20 | |
| | | DEG | | | | | | | | | |
| | | PG | 20 | 3 | 20 | 20 | 20 | 3 | 10 | | |
| Water-soluble solvent species in first ink and content thereof (% by mass) | | PGmME | 3 | 3 | 3 | 3 | 5.1 | 1 | 20 | | |
| | | PGmPE | | | | | | | | | |
| | | PGmBE | | | | | | | | | 3 |
| | | EG | | | | | | | | 30 | |
| | | PG | 30 | 30 | 30 | 30 | 51 | 10 | 13 | | 30 |
| Amount of pretreatment liquid applied (g/m$^2$) | | | 1.7 | 1.7 | 1.7 | 1.7 | 1.7 | 1.7 | 1.7 | 1.7 | 1.7 |
| Amount of first ink applied (g/m$^2$) | | | 7.2 | 7.2 | 7.2 | 7.2 | 7.2 | 7.2 | 7.2 | 7.2 | 7.2 |
| Amount of water-soluble organic solvent applied in pretreatment liquid (g/m$^2$) | | | 0.3 | 0.1 | 0.3 | 0.3 | 0.3 | 0.1 | 0.3 | 0.3 | 0.7 |
| Amount of water-soluble organic solvent applied in first ink (g/m$^2$) | | | 2.4 | 2.4 | 2.4 | 2.4 | 4.0 | 0.8 | 2.4 | 2.2 | 2.4 |
| Amount of water-soluble organic solvent applied in pretreatment liquid and first ink (g/m$^2$): A in Equation (X) | | | 2.7 | 2.4 | 2.7 | 2.7 | 4.4 | 0.8 | 2.7 | 2.5 | 3.1 |
| HSP distance (MPa$^{1/2}$) between water-soluble solvent in pretreatment liquid and first ink, and resin base material: $\Delta$HSP in Equation (X) | | | 20.1 | 20.0 | 22.1 | 17.1 | 20.0 | 20.0 | 15.3 | 25.4 | 17.5 |
| Value X defined as Equation (X) [=(d/A) x $\Delta$HSP)] | | | 170 | 189 | 163 | 158 | 105 | 545 | 130 | 234 | 132 |

EP 4 495 197 A1

26

| | | Example 1 | Example 2 | Example 3 | Example 4 | Example 5 | Example 6 | Example 7 | Example 8 | Example 9 |
|---|---|---|---|---|---|---|---|---|---|---|
| Value T/X | | 0.41 | 0.37 | 0.43 | 0.44 | 0.67 | 0.13 | 0.54 | 0.30 | 0.53 |
| Evaluation results | Intercolor misregistration | A | AA | A | B | B | AA | B | AA | B |
| | Streak defects | A | A | A | A | A | A | A | AA | A |
| | Jetting recovering properties | A | A | A | A | A | C | A | A | A |
| | Intercolor bleeding | A | A | A | A | C | A | A | C | C |

[Table 3]

| | | Example 10 | Example 11 | Example 12 | Example 13 | Example 14 | Example 15 | Example 16 | Example 17 | Example 18 | Example 19 |
|---|---|---|---|---|---|---|---|---|---|---|---|
| Resin base material | Resin | PET | PET | PET | PET | PET | PET | PET | OPP | Nylon | Nylon |
| | Thickness (μm): d in Equation (X) | 12 | 16 | 50 | 23 | 23 | 23 | 23 | 20 | 25 | 25 |
| | Tension T (N/m) | 70 | 70 | 70 | 25 | 40 | 100 | 150 | 70 | 40 | 100 |
| Water-soluble solvent species in pretreatment liquid and content thereof (% by mass) | PGmME | | | | | | | | | | |
| | PGmPE | | | | | | | | | | 20 |
| | EG | | | | | | | | | 5 | |
| | DEG | | | | | | | | 5 | | |
| | PG | 20 | 20 | 20 | 20 | 20 | 20 | 20 | | | |
| Water-soluble solvent species in first ink and content thereof (% by mass) | PGmME | | | | | | | | | 3 | 3 |
| | PGmPE | | | | | | | | | 3 | |
| | PGmBE | 3 | 3 | 3 | 3 | 3 | 3 | 3 | | 15 | 15 |
| | EG | | | | | | | | | | |
| | PG | 30 | 30 | 30 | 30 | 30 | 30 | 30 | 25 | | |
| Amount of pretreatment liquid applied (g/m²) | | 1.7 | 1.7 | 1.7 | 1.7 | 1.7 | 1.7 | 1.7 | 1.7 | 1.7 | 1.7 |
| Amount of first ink applied (g/m²) | | 7.2 | 7.2 | 7.2 | 7.2 | 7.2 | 7.2 | 7.2 | 7.2 | 7.2 | 7.2 |
| Amount of water-soluble organic solvent applied in pretreatment liquid (g/m²) | | 0.3 | 0.3 | 0.3 | 0.3 | 0.3 | 0.3 | 0.3 | 0.1 | 0.1 | 0.3 |
| Amount of water-soluble organic solvent applied in first ink (g/m²) | | 2.4 | 2.4 | 2.4 | 2.4 | 2.4 | 2.4 | 2.4 | 2.0 | 1.3 | 1.3 |
| Amount of water-soluble organic solvent applied in pretreatment liquid and first ink (g/m²): A in Equation (X) | | 2.7 | 2.7 | 2.7 | 2.7 | 2.7 | 2.7 | 2.7 | 2.1 | 1.4 | 1.6 |

|  |  | Example 10 | Example 11 | Example 12 | Example 13 | Example 14 | Example 15 | Example 16 | Example 17 | Example 18 | Example 19 |
|---|---|---|---|---|---|---|---|---|---|---|---|
| HSP distance (MPa$^{1/2}$) between water-soluble solvent in pretreatment liquid and first ink, and resin base material: ΔHSP in Equation (X) | | 19.9 | 19.9 | 19.9 | 19.9 | 19.9 | 19.9 | 19.9 | 21.8 | 7.3 | 6.6 |
| Value X defined as Equation (X) [= (d/A) x ΔHSP)] | | 88 | 117 | 367 | 169 | 169 | 169 | 169 | 207 | 133 | 100 |
| Value T/X | | 0.80 | 0.60 | 0.19 | 0.15 | 0.24 | 0.59 | 0.89 | 0.34 | 0.30 | 1.00 |
| Evaluation results | Intercolor misregistration | C | B | AA | AA | A | B | C | AA | B | C |
| | Streak defects | C | B | AA | C | B | AA | AA | A | B | B |
| | Jetting recovering properties | A | A | A | A | A | A | A | A | A | C |
| | Intercolor bleeding | A | A | B | A | A | A | A | B | A | A |

EP 4 495 197 A1

[Table 4]

| | | | Comparative Example 1 | Comparative Example 2 |
|---|---|---|---|---|
| Resin base material | | Resin | PET | Nylon |
| | | Thickness ($\mu$m): d in Equation (X) | 23 | 25 |
| | | Tension T (N/m) | 10 | 70 |
| Water-soluble solvent species in pretreatment liquid and content thereof (% by mass) | | PGmME | 20 | 20 |
| | | PGmPE | | |
| | | EG | | |
| | | DEG | | |
| | | PG | | |
| Water-soluble solvent species in first ink and content thereof (% by mass) | | PGmME | 30 | 30 |
| | | PGmPE | | |
| | | PGmBE | | |
| | | EG | | |
| | | PG | 3 | 3 |
| Amount of pretreatment liquid applied (g/m$^2$) | | | 1.7 | 1.7 |
| Amount of first ink applied (g/m$^2$) | | | 7.2 | 7.2 |
| Amount of water-soluble organic solvent applied in pretreatment liquid (g/m$^2$) | | | 0.3 | 0.3 |
| Amount of water-soluble organic solvent applied in first ink (g/m$^2$) | | | 2.4 | 2.4 |
| Amount of water-soluble organic solvent applied in pretreatment liquid and first ink (g/m$^2$): A in Equation (X) | | | 2.7 | 2.7 |
| HSP distance (MPa$^{1/2}$) between water-soluble solvent in pretreatment liquid and first ink, and resin base material: $\Delta$HSP in Equation (X) | | | 12.3 | 9.0 |
| Value X defined as Equation (X) [=(d/A) $\times$ $\Delta$HSP)] | | | 104 | 83 |
| Value T/X | | | 0.10 | 0.85 |
| Evaluation results | | Intercolor misregistration | B | D |
| | | Streak defects | D | A |
| | | Jetting recovering properties | A | A |
| | | Intercolor bleeding | A | A |

As listed in Tables 2 and 3, according to the recording method of each example, including an applying step of applying the pretreatment liquid onto the resin base material during transportation in a state where a tension T of 20 N/m or greater was applied thereto and applying the first ink and the second ink in this order respectively by the ink jet recording system, in which the value X defined by Equation (X) was 85 or greater, a multicolor image with suppressed intercolor misregistration and suppressed streak-like defects was obtained.

Meanwhile, the results of the comparative examples are as listed in Table 4.

In Comparative Example 1 in which the tension T was less than 20 N/m, the streak-like defects could not be suppressed.

Further, in Comparative Example 2 in which the value X was less than 85, the intercolor misregistration could not be suppressed.

As shown in the results of Examples 6 and 12, it was found that the jetting stability of the first ink was further improved in a case where the value X was 400 or less (Example 12).

As shown in the results of Examples 1 to 6, it was found that the jetting stability of the first ink was further improved in a case where the value T/X was 0.30 or greater (Examples 1 to 5).

As shown in the results of Examples 1 to 6, it was that the intercolor bleeding was further suppressed in a case where the value T/X was 0.65 or less (Examples 1 to 4 and 6).

As shown in the results of Examples 13 and 14, it was found that the streak defects were further suppressed in a case where the tension T was 30 N/m or greater (Example 14).

[Examples 101 to 119 and Comparative Examples 101 and 102]

The same operations as in Examples 1 to 19 and Comparative Examples 1 and 2 were performed except for the following points.

As a result, it was confirmed that the same effects as those of Examples 1 to 19 were obtained in Examples 101 to 119.

- Differences between Examples 1 to 19 and Comparative Examples 1 and 2 -

The black ink, the cyan ink, the magenta ink, and the yellow ink were applied in this order in an overlapping manner in Examples 101 to 119 and Comparative Examples 101 and 102, whereas only the cyan ink was applied as the first ink in Examples 1 to 19 and Comparative Examples 1 and 2. The same cyan ink as that in Examples 1 to 19 and Comparative Examples 1 and 2 was used as the cyan ink.

The total amount ($g/m^2$) of the black ink, the cyan ink, the magenta ink, and the yellow ink applied was set to be the same as the amount ($g/m^2$) of the cyan ink applied in Examples 1 to 19 and Comparative Examples 1 and 2.

The amount of each of the black ink, the cyan ink, the magenta ink, and the yellow ink applied was set to 25% of the amount ($g/m^2$) of the cyan ink applied in Examples 1 to 19 and Comparative Examples 1 and 2.

The compositions of the black ink, the magenta ink, and the yellow ink serving as the first ink are as follows.

<Composition of black ink>

· APD4000 Black (manufactured by Fujifilm Imaging Colorants Ltd.): 4.0% by mass in terms of content of pigment
· Water-soluble organic solvent: kind and addition amount in examples listed in tables
· Propylene glycol monomethyl ether (water-soluble organic solvent): 1.0% by mass
· NeoCryl A-1105 (acrylic resin particle dispersion liquid) (manufactured by DSM): 5.0% by mass in terms of content of resin particles
· OLFINE E1010 (manufactured by Nissin Chemical Co., Ltd., acetylene glycol-based surfactant): 1.0% by mass
· BYK3450 (silicone-based surfactant, manufactured by BYK-Chemie GmbH): 1.0% by mass
· PVPK15 (polyvinylpyrrolidone K15): 0.15% by mass
· ST-XS (colloidal silica dispersion liquid) (manufactured by Nissan Chemical Corporation): 0.05% by mass in terms of content of colloidal silica particles
· Water: remaining amount such that total amount of ink reached 100% by mass

<Composition of magenta ink>

· APD4000 Magenta (manufactured by Fujifilm Imaging Colorants Ltd.): 5.0% by mass in terms of content of pigment
· Water-soluble organic solvent: kind and addition amount in examples listed in tables
· Propylene glycol monomethyl ether (water-soluble organic solvent): 1.0% by mass
· NeoCryl A-1105 (acrylic resin particle dispersion liquid) (manufactured by DSM): 5.0% by mass in terms of content of resin particles
· OLFINE E1010 (manufactured by Nissin Chemical Co., Ltd., acetylene glycol-based surfactant): 1.0% by mass
· BYK3450 (silicone-based surfactant, manufactured by BYK-Chemie GmbH): 1.0% by mass
· PVPK15 (polyvinylpyrrolidone K15): 0.15% by mass
· ST-XS (colloidal silica dispersion liquid) (manufactured by Nissan Chemical Corporation): 0.05% by mass in terms of content of colloidal silica particles
· Water: remaining amount such that total amount of ink reached 100% by mass

<Preparation of Yellow Ink>

· APD4000 Yellow (manufactured by Fujifilm Imaging Colorants Ltd.): 4.0% by mass in terms of content of pigment
· Water-soluble organic solvent: kind and addition amount in examples listed in tables
· Propylene glycol monomethyl ether (water-soluble organic solvent): 1.0% by mass
· NeoCryl A-1105 (acrylic resin particle dispersion liquid) (manufactured by DSM): 5.0% by mass in terms of content of resin particles
· OLFINE E1010 (manufactured by Nissin Chemical Co., Ltd., acetylene glycol-based surfactant): 1.0% by mass
· BYK3450 (silicone-based surfactant, manufactured by BYK-Chemie GmbH): 1.0% by mass
· PVPK15 (polyvinylpyrrolidone K15): 0.15% by mass
· ST-XS (colloidal silica dispersion liquid) (manufactured by Nissan Chemical Corporation): 0.05% by mass in terms of content of colloidal silica particles
· Water: remaining amount such that total amount of ink reached 100% by mass

The disclosure of JP2022-039587 filed on March 14, 2022 is incorporated herein by reference in its entirety.
All documents, patent applications, and technical standards described in the present specification are incorporated herein by reference to the same extent as in a case of being specifically and individually noted that individual documents, patent applications, and technical standards are incorporated by reference.

**Claims**

1. An inkjet recording method comprising:

   a step of preparing a resin base material;
   a step of preparing a pretreatment liquid which contains water and an aggregating agent;
   a step of preparing a first ink which contains water, a water-soluble organic solvent, and a pigment and is one of a colored ink and a white ink;
   a step of preparing a second ink which contains water, a water-soluble organic solvent, and a pigment and is the other of the colored ink and the white ink; and
   an applying step of applying the pretreatment liquid onto the resin base material during transportation in a state where a tension T of 20 N/m or greater is applied to the resin base material and applying the first ink and the second ink in this order onto a region of the resin base material where the pretreatment liquid has been applied respectively by an inkjet recording system,
   wherein a value X defined by Equation (X) is 85 or greater,

   $$\text{Value X} = (d/A) \times \Delta\text{HSP} \dots \text{Equation (X)}$$

   in Equation (X), d represents a thickness of the resin base material in units of $\mu$m, A represents a total amount of the water-soluble organic solvent to be applied in units of g/m$^2$ in the pretreatment liquid and the first ink applied onto the resin base material in the applying step, and $\Delta$HSP represents an HSP distance in units of MPa$^{1/2}$ between the water-soluble organic solvent in the pretreatment liquid and the first ink applied onto the resin base material in the applying step and the resin base material.

2. The inkjet recording method according to claim 1,
   wherein the value X is 400 or less.

3. The inkjet recording method according to claim 1 or 2,
   wherein a value T/X, which is a value obtained by dividing the tension T by the value X, is 0.30 or greater and 0.65 or less.

4. The inkjet recording method according to any one of claims 1 to 3,
   wherein the $\Delta$HSP is 10.0 or greater and 23.0 or less.

5. The inkjet recording method according to any one of claims 1 to 4,

wherein the tension T is 200 N/m or less.

6. The inkjet recording method according to any one of claims 1 to 5, wherein the tension T is 120 N/m or less.

7. The ink jet recording method according to any one of claims 1 to 6, wherein the tension T is 30 N/m or greater.

FIG. 1

<table>
<tr><td colspan="2" align="center">**INTERNATIONAL SEARCH REPORT**</td><td>International application No.<br>**PCT/JP2023/005561**</td></tr>
</table>

**A. CLASSIFICATION OF SUBJECT MATTER**

*C09D 11/40*(2014.01)i; *C09D 11/54*(2014.01)i; *B41M 5/00*(2006.01)i; *B41J 2/01*(2006.01)i
FI: B41M5/00 100; B41M5/00 132; B41M5/00 120; B41M5/00 112; C09D11/54; C09D11/40; B41J2/01 123

According to International Patent Classification (IPC) or to both national classification and IPC

**B. FIELDS SEARCHED**

Minimum documentation searched (classification system followed by classification symbols)

C09D11/40; C09D11/54; B41M5/00; B41J2/01

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/066454 A1 (FUJIFILM CORP) 02 April 2020 (2020-04-02)<br>paragraphs [0004], [0218], [0239]-[0275] | 1-7 |
| Y | JP 2020-138417 A (SEIKO EPSON CORP) 03 September 2020 (2020-09-03)<br>paragraphs [0039]-[0065] | 1-7 |
| Y | WO 2021/015046 A1 (FUJIFILM CORP) 28 January 2021 (2021-01-28)<br>paragraphs [0163]-[0191] | 1-7 |

☐ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **05 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| | International application No. |
|---|---|
| | **PCT/JP2023/005561** |

| Patent document cited in search report | Publication date (day/month/year) | Patent family member(s) | Publication date (day/month/year) |
|---|---|---|---|
| WO 2020/066454 A1 | 02 April 2020 | US 2021/0197606 A1 paragraphs [0006], [0452], [0493]-[0621] | |
| JP 2020-138417 A | 03 September 2020 | US 2020/0276827 A1 paragraphs [0042]-[0070] | |
| WO 2021/015046 A1 | 28 January 2021 | US 2022/0143998 A1 paragraphs [0411]-[0533] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017088646 A
- WO 2020195360 A
- JP 2013001854 A
- JP 2002012607 A
- JP 2002188025 A
- JP 2003026978 A
- JP 2003342503 A
- WO 2021221069 A
- JP 54059936 A
- JP S5459936 A
- JP 2003306623 A
- JP 2022039587 A